# FASCICULE DE BREVET EUROPEEN

(11) **EP 4 128 307 B1**
(45) Date de publication et mention de la délivrance du brevet: **22.10.2025**
(21) Numéro de dépôt: 21722275.1
(22) Date de dépôt: 01.04.2021
(51) Int. Cl.: H01H 85/20

(54) **CÂBLE D'ALIMENTATION ELECTRIQUE COMPRENANT UN FUSIBLE ET UN ELEMENT SURMOULE DE PROTECTION DU FUSIBLE A SUREPAISSEUR**
STROMVERSORGUNGSKABEL MIT EINER SCHMELZSICHERUNG UND EINEM UMSPRITZTEN ELEMENT ZUM SCHUTZ DER UMSPRITZTEN SCHMELZSICHERUNG
POWER SUPPLY CABLE COMPRISING A FUSE AND AN OVERMOULDED ELEMENT FOR PROTECTING THE OVERMOULDED FUSE

(30) Priorité: 03.04.2020 FR 2003341
(43) Date de publication de la demande: 08.02.2023
(73) Titulaire: Nexans, 92400 Courbevoie (FR)
(72) Inventeur: LAGOMARSINI, Clara, 69003 LYON (FR); CHARMETANT, Adrien, 01700 MIRIBEL (FR); ADAMS, Valentin, 42480 LA FOUILLOUSE (FR)
(74) Mandataire: Cabinet Boettcher
(86) Numéro de dépôt international: PCT/FR2021/050574
(87) Numéro de publication internationale: WO 2021/198619

(56) Documents cités:
- DE-A1- 3 728 775
- KR-B1- 101 744 660
- US-A- 2 770 757
- US-A1- 2013 257 580

## Description

La présente invention concerne le domaine des câbles d'alimentation électrique, notamment pour une installation photovoltaïque.

En particulier, l'invention concerne les câbles d'alimentation comprenant un fusible autour duquel est disposé un élément de protection électrique.

Une installation photovoltaïque, e.g. du type centrale solaire photovoltaïque, comprend généralement des câbles d'alimentation électrique et un ou plusieurs fusibles (câbles appelés « photovoltaïc harnesses » en anglais) ayant pour fonction d'empêcher des surintensités pouvant endommager les câbles d'alimentation eux-mêmes ou des panneaux photovoltaïques de l'installation. Ces câbles d'alimentation électrique sont des câbles basse tension.

Ces surintensités peuvent être liées à des défauts électriques endogènes, i.e. provenant d'équipements électriques de l'installation (connecteur, interrupteur, panneau photovoltaïque, boîtier de multiplexage, etc.) ou exogènes, e.g. liés à la foudre.

Le fusible est, par exemple dans le cadre de la solution KEYLIOS^{®} Harnais PV de NEXANS^{®}, agencé dans un câble d'alimentation électrique en connectant le fusible en série dans le câble d'alimentation électrique à protéger. En d'autres termes, le câble d'alimentation électrique comprend un conducteur électrique connecté en série au fusible. En pratique, le câble d'alimentation électrique comprend une première portion de conducteur électrique, un fusible et une deuxième portion de conducteur électrique connectés en série les uns par rapport aux autres.

Dans une configuration d'installation comprenant une pluralité de câbles d'alimentation électrique reliés à un ou plusieurs panneaux photovoltaïques, ces câbles sont montés en parallèle les uns par rapport aux autres.

Le fusible peut être associé au câble d'alimentation suivant une première technologie dans laquelle le fusible est disposé dans un porte-fusible raccordé à deux extrémités de câbles d'alimentation électrique ou suivant une deuxième technologie dans laquelle le fusible est intégré à l'intérieur d'un surmoulage intégré au câble d'alimentation électrique.

Dans cette première technologie, le porte-fusible comprend deux raccords de connexions destinés à être raccordés chacun à une extrémité de connexion d'un câble d'alimentation électrique. Le porte-fusible est donc un accessoire rapporté et extérieur au câble d'alimentation électrique. Le porte-fusible n'est donc pas fabriqué au même moment que les câbles d'alimentation électrique lors d'un seul et même procédé de fabrication.

Dans cette deuxième technologie, le fusible fait partie intégrante du câble d'alimentation électrique. Le fusible est donc intégré à l'intérieur du câble d'alimentation électrique lors de sa fabrication. Un élément de protection est surmoulé autour du fusible durant ce procédé de fabrication.

La présente invention concerne cette deuxième technologie intégrant le fusible à l'intérieur du câble d'alimentation avec un élément de protection surmoulé autour du fusible.

Cet élément de protection surmoulé assure à la fois la sécurité et la durabilité du câble d'alimentation électrique et du ou des fusibles, notamment liés au vieillissement thermique, à la pénétration d'eau et aux contraintes électriques.

L'élément de protection est ainsi conçu pour cibler et respecter les contraintes suivantes:
- une température maximale du corps du fusible ; tel qu'indiqué dans la fiche technique des constructeurs de fusibles, la température du corps du fusible doit inférieure à une valeur prédéterminée (généralement disponible dans la fiche technique du composant) pour garantir l'intégrité des composants du fusible et ainsi assurer son bon fonctionnement,
- une température maximale du matériau surmoulé ; la température maximale du matériau surmoulé doit être inférieure à une valeur prédéterminée (généralement disponible dans la fiche technique du matériau) pour éviter les phénomènes de vieillissement accéléré de l'élément de protection et maintenir ses propriétés physico-chimiques,
- une durée de vie du câble d'alimentation ; cette durée de vie doit être supérieure à la durée de vie généralement attendue pour ce type de câble d'alimentation électrique d'installation photovoltaïque, par exemple 20 ans,
- une température de la surface externe de l'élément de protection ; la température externe de l'élément de protection doit en effet être inférieure à une valeur prédéterminée pour des raisons de sécurité ; un exemple d'un telle valeur prédéterminée est de 95°C selon la norme UL9703,
- un champ électrique maximum dans l'isolation des câbles d'alimentation électrique et dans l'élément de protection.

En fonction du courant total circulant dans le conducteur électrique du câble électrique et dans le fusible, une conception non optimisée de l'élément de protection peut conduire à un non-respect de l'une ou plusieurs parmi les contraintes précitées. En particulier, il a été observé que les éléments de protection surmoulés connus non optimisés, notamment de forme cylindrique ou de section uniforme, ne permettaient pas de respecter les valeurs de température attendues sous certaines conditions d'installation.

Le document DE 37 28 775 A1 décrit un fusible pour un câble d'alimentation électrique selon le préambule de la revendication 1.

Il existe donc un besoin pour un câble d'alimentation électrique comprenant un fusible et un élément de protection ne présentant pas les inconvénients ci-dessus.

En particulier, il existe un besoin pour un tel câble d'alimentation électrique permettant de respecter l'ensemble des contraintes associés à ce type de câbles, à savoir une température maximale du corps du fusible, une température maximale du matériau surmoulé, une durée de vie du câble d'alimentation, une température de la surface externe de l'élément de protection et un champ électrique maximum dans l'isolation des câbles d'alimentation électrique et dans l'élément de protection.

Pour cela, l'invention propose un câble d'alimentation électrique pour installation photovoltaïque, comprenant un conducteur électrique ayant au moins deux portions de conducteur électrique et un fusible disposé entre lesdites au moins deux portions de conducteur électrique, ledit au moins un fusible reliant électriquement lesdites au moins deux portions de conducteur électrique, le câble comprenant en outre un élément de protection surmoulé autour dudit fusible et formant une couche d'isolation électrique , ledit élément de protection comprenant au moins une surépaisseur au niveau d'au moins une portion d'extrémité de l'élément de protection.

Grâce à des modèles d'éléments finis thermiques, il a été observé que dans des conditions de fonctionnement normales les échanges de chaleur à la surface de l'élément de protection surmoulé jouent un rôle majeur dans la détermination de la température de l'élément de protection surmoulé et l'un des autres composants en contact avec lui (câble et fusible). Il est ainsi proposé une optimisation de la conception de l'élément de protection pour améliorer les phénomènes convectifs et de radiation à sa surface.

En particulier, il a été observé que l'échauffement maximal intervenait au niveau des bordures de l'élément de protection, au niveau de l'interface entre le fusible et de chacune des portions de câble d'alimentation électrique reliées au fusible.

La surépaisseur de matière au niveau d'au moins une portion d'extrémité de l'élément de protection permet ainsi d'améliorer les échanges thermiques avec l'air environnant l'élément de protection. La chaleur émise par les conducteurs électrique et le fusible est ainsi mieux dissipée ce qui permet à l'élément de protection de respecter les contraintes requises sans nécessiter un ajout trop important de matière sur l'ensemble de la longueur de l'élément de protection.

On obtient donc une conception optimisée de l'élément de protection dans laquelle la dissipation thermique est améliorée au niveau de la zone où la température maximale est présente. Une optimisation de la quantité de matière utilisée pour l'élément de protection et de son design peut ainsi être réalisée tout en garantissant une bonne efficacité de celui-ci.

L'élément de protection est de préférence surmoulé sur le fusible par moulage à basse pression. Le matériau formant l'élément de protection est ainsi coulé sur le fusible à l'intérieur d'un moule. Cette technique de moulage à basse pression permet d'éviter toute détérioration du câble due à la pression de moulage et de garantir un bon positionnement du fusible tout au long du moulage.

Le matériau et les dimensions de l'élément de protection sont choisies pour rendre l'élément de protection électriquement isolant. Le matériau est notamment choisi en fonction de sa conductivité électrique ainsi que pour ses propriétés physico-chimiques lui permettant d'être moulé de manière satisfaisante, notamment par le procédé de moulage à basse pression mentionné ci-avant. A titre d'exemple, le matériau peut être choisi de manière à présenter une conductivité électrique égale à 0,3 W/(m*K).

Selon un mode de réalisation du câble d'alimentation électrique, l'élément de protection est de section annulaire. L'élément de protection peut être de section circulaire.

Selon un mode de réalisation du câble d'alimentation électrique, celui-ci comprend en outre une gaine isolante disposée autour desdits au moins portions de conducteur électrique, ledit élément de protection chevauchant au moins partiellement ladite gaine isolante. L'élément de protection est ainsi surmoulé autour du fusible ainsi qu'autour d'une portion de la gaine isolante du câble d'alimentation électrique. Le fusible est ainsi pleinement intégré au câble d'alimentation électrique.

L'élément de protection surmoulé est de préférence réalisé en matériau isolant.

Selon un mode de réalisation du câble d'alimentation électrique, l'élément de protection est en matériau polymère, de préférence en polyamide. Réaliser l'élément de protection en polyamide permet d'obtenir une bonne dissipation thermique, une bonne isolation électrique ainsi qu'une fabrication aisée de l'élément de protection par moulage à basse pression.

Selon un mode de réalisation du câble d'alimentation électrique, chacune desdites au moins deux portions de conducteur électrique s'étend le long d'un axe principal du câble d'alimentation, l'élément de protection s'étendant le long de cet axe principal, ladite au moins une surépaisseur s'étendant transversalement à cet axe principal. La surépaisseur forme ainsi une portion en saillie par rapport à un corps de l'élément de protection.

Selon un mode de réalisation du câble d'alimentation électrique, ladite au moins une surépaisseur s'étend au moins partiellement autour de l'axe principal. De manière préférée, ladite au moins une surépaisseur s'étend sur la totalité du secteur angulaire de la section transversale de l'élément de protection de manière à former une couronne. La dissipation de chaleur est ainsi améliorée sur la totalité de la circonférence de l'élément de protection.

Selon un mode de réalisation du câble d'alimentation électrique, ledit fusible présente deux extrémités reliées chacune à une portion de conducteur électrique, l'élément de protection s'étendant le long dudit axe principal au-delà ou en correspondance des deux extrémités dudit fusible. Ainsi, l'élément de protection recouvre la zone d'interface entre le conducteur électrique et le fusible. L'élément de protection est ainsi présent au niveau de la zone où la température est maximale en utilisation. De manière préférée, ladite au moins une surépaisseur est disposée au niveau de cette interface le long de l'axe principal.

Selon un mode de réalisation du câble d'alimentation électrique, ladite au moins une surépaisseur présente une dimension transversale maximale au moins 20% supérieure à la dimension transversale maximale d'une portion centrale de l'élément de protection disposée au niveau dudit fusible, de préférence au moins 50% supérieure, de manière encore préférée au moins 70% supérieure.

Selon un mode de réalisation du câble d'alimentation électrique, l'élément de protection présente une section transversale au moins partiellement croissante depuis une portion centrale disposée au niveau dudit fusible vers ladite au moins une portion d'extrémité. On entend par « au moins partiellement croissante » le fait que la portion d'extrémité comprend au moins localement une section transversale supérieure à la section transversale maximale de la portion centrale. La section transversale de ladite au moins une portion d'extrémité peut être elle-même croissante ou constante. De plus, la section transversale de ladite au moins une portion d'extrémité peut être croissante puis décroissante.

De manière préférée, l'élément de protection présente une section transversale maximale au niveau de ladite au moins une portion d'extrémité. De manière encore préférée, l'élément de protection présente une section transversale maximale au niveau de l'extrémité du fusible le long de l'axe principal.

De manière alternative, la section transversale maximale de l'élément de protection peut être décalée de l'extrémité du fusible le long de l'axe principal. Ainsi, cette section transversale maximale peut être formée en amont ou en aval de cette extrémité du fusible le long de l'axe principal depuis le centre vers les extrémités de l'élément de protection.

La position de la section transversale maximale est un compromis entre la dissipation d'énergie permettant de respecter les températures maximales requises et une bonne tenue mécanique de l'interface entre le fusible et le conducteur électrique. De manière préférée, la section transversale maximale est disposée en aval de l'extrémité du fusible le long de l'axe principal depuis le centre vers les extrémités de l'élément de protection. En d'autres termes, cette section transversale maximale est de préférence disposée entre une extrémité de l'élément de protection et l'extrémité dudit fusible, le long de l'axe principal.

Selon un mode de réalisation du câble d'alimentation électrique, l'élément de protection présente une surface externe ayant une pluralité de reliefs. En d'autres termes, la surface externe de l'élément de protection est texturée de manière à améliorer les échanges convectifs et de radiation avec l'air environnant. Ceci permet notamment de réduire la masse de l'élément de protection tout en respectant les contraintes requises.

La pluralité de reliefs forme une variation locale de section de l'élément de protection augmentant la surface d'échange avec l'air environnant. On distingue la variation locale de section transversale dont la variation est inférieure à 15% de la section transversale de l'élément de protection au niveau de sa portion centrale et la variation globale de section transversale dont la variation est supérieure ou égale à 15% de la section transversale de l'élément de protection au niveau de sa portion centrale.

La pluralité de reliefs peut être formée au niveau d'une première portion d'extrémité et/ou de la portion centrale et/ou d'une deuxième portion d'extrémité.

### Brève description des dessins

Les dessins annexés illustrent l'invention :
[Fig. 1] représente schématiquement une vue en perspective d'un câble d'alimentation électrique comprenant un fusible et un premier mode de réalisation d'un élément de protection surmoulé.
[Fig. 2] représente schématiquement une distribution des températures à l'intérieur du câble d'alimentation électrique comprenant le premier mode de réalisation de l'élément de protection.
[Fig. 3] représente schématiquement une vue de côté d'un deuxième mode de réalisation de l'élément de protection surmoulé.
[Fig. 4] représente schématiquement une vue de côté d'un troisième mode de réalisation de l'élément de protection surmoulé.
[Fig. 5] représente schématiquement une vue de côté d'un quatrième mode de réalisation de l'élément de protection surmoulé.

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

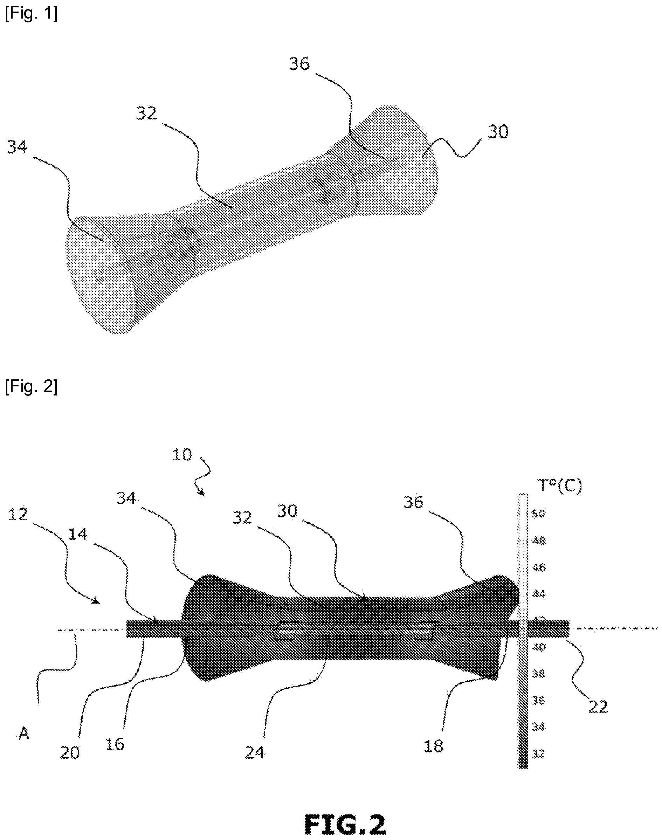

En référence aux figures 1 et 2, un câble d'alimentation électrique 10 pour installation photovoltaïque comprend un conducteur électrique 12 et une gaine isolante 14 disposée autour du conducteur électrique 12. Le câble d'alimentation électrique 10 s'étend le long d'un axe principal A.

Le conducteur électrique 12 comprend une première 16 et une deuxième 18 portions de conducteur électrique. La gaine isolante 14 comprend également une première 20 et une deuxième 22 portions de gaine isolante respectivement disposées autour des première 16 et deuxième 18 portions de conducteur électrique.

La câble d'alimentation électrique 10 comprend également un fusible 24 disposé et connecté électriquement entre les première 16 et deuxième 18 portions de conducteur électrique.

Le câble d'alimentation électrique 10 comprend en outre un premier mode de réalisation d'un élément de protection 30 surmoulé autour du fusible 24. L'élément de protection 30 comprend une portion centrale 32 disposée autour du fusible 24. La portion centrale 32 est de section circulaire constante.

L'élément de protection 30 comprend également une première 34 et une deuxième 36 portions d'extrémité disposé de part et d'autre de la portion centrale 32. Les première 34 et deuxième 36 portions d'extrémité sont de section transversale circulaire croissante le long de l'axe principal A depuis la portion centrale 32 vers les extrémités de l'élément de protection 30. Cette section croissante forme ainsi une surépaisseur. En particulier, les première 34 et deuxième 36 portions d'extrémité forment chacune une portion tronconique dont la section transversale maximale est formée au niveau des extrémités de l'élément de protection 30. La base de chacune des première 34 et deuxième 36 portions d'extrémité commence au niveau d'une extrémité 38 du fusible 24, le long de l'axe principal A.

En référence à la figure 2, on observe que la température maximale déterminée est environ de 50°C au niveau de l'interface entre le fusible 24 et le conducteur électrique 12 lorsque l'élément de protection 30 est en utilisation. En particulier, il a été observé que pour des valeurs de température ambiante comprises entre 30 ° C et 90 ° C, l'élément de protection 30 respecte les contraintes requises.

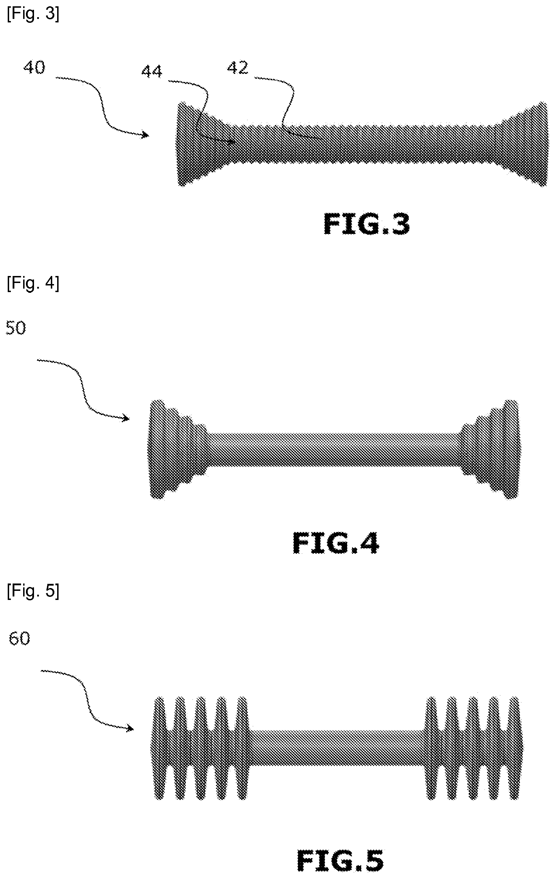

Un deuxième mode de réalisation de l'élément de protection est présenté en figure 3. Un élément de protection 40 diffère du premier mode de réalisation de l'élément de protection 30 en ce qu'une pluralité de reliefs 42 est formé au niveau d'une surface externe 44 de l'élément de protection 40. Les reliefs 42 sont ici formés sur la totalité de la surface externe 44. Les reliefs 42 sont formés par une pluralité de surépaisseurs locales circulaires.

L'élément de protection 40 combine une section transversale croissante vers ses extrémités et une pluralité de reliefs au niveau de la totalité de sa surface externe 44. Il a été observé que parmi les modes de réalisation présentés, l'élément de protection 40 présente la meilleure dissipation de chaleur.

En référence à la figure 4, un troisième mode de réalisation de l'élément de protection est présenté. Un élément de protection 50 diffère de l'élément de protection 40 en ce que la croissance de la section des première 34 et deuxième 36 portions d'extrémité est discontinue. En d'autres termes, les première 34 et deuxième 36 portions d'extrémité forment une section transversale par paliers.

En référence à la figure 5, un troisième mode de réalisation de l'élément de protection est présenté. Un élément de protection 60 comprend des première 34 et deuxième 36 portions d'extrémité dont la section transversale est successivement croissante puis décroissante pour former une pluralité de disques le long de l'axe principal A.

## Revendications

1. Câble d'alimentation électrique (10) pour installation photovoltaïque, comprenant un conducteur électrique (12) ayant au moins deux portions de conducteur électrique (20, 22) et un fusible (24) disposé entre lesdites au moins deux portions de conducteur électrique (20, 22), ledit au moins un fusible (24) reliant électriquement lesdites au moins deux portions de conducteur électrique (20, 22), le câble (10) comprenant en outre un élément de protection (30, 40, 50, 60) surmoulé autour dudit fusible (24) et formant une couche d'isolation électrique,
**caractérisé en ce que** ledit élément de protection (30, 40, 50, 60) comprend au moins une surépaisseur au niveau d'au moins une portion d'extrémité (34, 36) de l'élément de protection (30, 40, 50, 60).

2. Câble d'alimentation (10) selon la revendication 1, comprenant en outre une gaine isolante disposée autour desdits au moins deux portions de conducteur électrique, ledit élément de protection chevauchant au moins partiellement ladite gaine isolante.

3. Câble d'alimentation (10) la revendication 1 ou 2, dans lequel l'élément de protection est en matériau polymère, de préférence en polyamide.

4. Câble d'alimentation (10) selon l'une quelconque des revendications 1 à 3, dans lequel chacune desdites au moins deux portions de conducteur électrique s'étend le long d'un axe principal (A) du câble d'alimentation, l'élément de protection s'étendant le long de cet axe principal, ladite au moins une surépaisseur s'étendant transversalement à cet axe principal.

5. Câble d'alimentation (10) selon la revendication 4, dans lequel ladite au moins une surépaisseur s'étend au moins partiellement autour de l'axe principal.

6. Câble d'alimentation (10) selon la revendication 4 ou 5, dans lequel ledit fusible présente deux extrémités reliées chacune à une portion de conducteur électrique, l'élément de protection s'étendant le long dudit axe principal au-delà des deux extrémités dudit fusible.

7. Câble d'alimentation (10) selon l'une quelconque des revendications précédentes, dans lequel ladite au moins une surépaisseur présente une dimension transversale maximale au moins 20% supérieure à la dimension transversale maximale d'une portion centrale de l'élément de protection disposée au niveau dudit fusible, de préférence au moins 50% supérieure, de manière encore préférée au moins 70% supérieure.

8. Câble d'alimentation (10) selon l'une quelconque des revendications précédentes, dans lequel l'élément de protection présente une section transversale au moins partiellement croissante depuis une portion centrale disposée au niveau dudit fusible vers ladite au moins une portion d'extrémité.

9. Câble d'alimentation (10) selon l'une quelconque des revendications précédentes, dans lequel l'élément de protection présente une surface externe ayant une pluralité de reliefs (42).

## Patentansprüche

1. Stromversorgungskabel (10) für eine Photovoltaikanlage, umfassend einen elektrischen Leiter (12) mit zumindest zwei elektrischen Leiterabschnitten (20, 22) und einer Schmelzsicherung (24), die zwischen den zumindest zwei elektrischen Leiterabschnitten (20, 22) angeordnet ist, wobei die zumindest eine Schmelzsicherung (24) die zumindest zwei elektrischen Leiterabschnitte (20, 22) elektrisch miteinander verbindet, wobei das Kabel (10) ferner ein Schutzelement (30, 40, 50, 60) umfasst, mit dem die Schmelzsicherung (24) umspritzt wird, wodurch eine Isolierschicht gebildet wird,
**dadurch gekennzeichnet, dass** das Schutzelement (30, 40, 50, 60) zumindest eine Überdicke an zumindest einem Endabschnitt (34, 36) des Schutzelements (30, 40, 50, 60) umfasst.

2. Versorgungskabel (10) nach Anspruch 1, ferner umfassend einen Isoliermantel, der um die zumindest zwei elektrischen Leiterabschnitte herum angeordnet ist, wobei das Schutzelement den Isoliermantel zumindest teilweise überdeckt.

3. Versorgungskabel (10) nach Anspruch 1 oder 2, wobei das Schutzelement aus Polymermaterial, vorzugsweise aus Polyamid, besteht.

4. Versorgungskabel (10) nach einem der Ansprüche 1 bis 3, wobei sich jeder der zumindest zwei elektrischen Leiterabschnitte entlang einer Hauptachse (A) des Versorgungskabels erstreckt, wobei sich das Schutzelement entlang dieser Hauptachse erstreckt, wobei sich die zumindest eine Überdicke quer zu dieser Hauptachse erstreckt.

5. Versorgungskabel (10) nach Anspruch 4, wobei sich die zumindest eine Überdicke zumindest teilweise um die Hauptachse herum erstreckt.

6. Versorgungskabel (10) nach Anspruch 4 oder 5, wobei die Schmelzsicherung zwei Enden aufweist, die jeweils mit einem elektrischen Leiterabschnitt verbunden sind, wobei sich das Schutzelement entlang der Hauptachse über beide Enden der Schmelzsicherung hinaus erstreckt.

7. Versorgungskabel (10) nach einem der vorhergehenden Ansprüche, wobei die zumindest eine Überdicke eine maximale Querabmessung aufweist, die um zumindest 20%, vorzugsweise um zumindest 50%, besonders bevorzugt um zumindest 70% größer ist als die maximale Querabmessung eines im Bereich der Schmelzsicherung angeordneten Zentralabschnitts des Schutzelements.

8. Versorgungskabel (10) nach einem der vorhergehenden Ansprüche, wobei das Schutzelement einen Querschnitt aufweist, der zumindest teilweise von einem im Bereich der Schmelzsicherung angeordneten Zentralabschnitt zu dem zumindest einen Endabschnitt hin zunimmt.

9. Versorgungskabel (10) nach einem der vorhergehenden Ansprüche, wobei das Schutzelement eine Außenfläche mit einer Mehrzahl von Reliefstrukturen (42) aufweist.

## Claims

1. An electrical power supply cable (10) for a photovoltaic installation, comprising an electrical conductor (12) having at least two electrical conductor portions (20, 22) and a fuse (24) arranged between said at least two electrical conductor portions (20, 22), said at least one fuse (24) electrically connecting said at least two electrical conductor portions (20, 22), the cable (10) further comprising a shielding element (30, 40, 50, 60) overmoulded around said fuse (24) and forming an electrically insulating layer,
**characterised in that** said shielding element (30, 40, 50, 60) comprises at least one excess thickness at at least one end portion (34, 36) of the shielding element (30, 40, 50, 60).

2. The power supply cable (10) according to claim 1, further comprising an insulating sheath arranged around said at least two electrical conductor portions, said shielding element at least partially overlapping said insulating sheath.

3. The power supply cable (10) according to claim 1 or 2, wherein the shielding element is made of polymer material, preferably polyamide.

4. The power supply cable (10) according to any one of claims 1 to 3, wherein each of said at least two electrical conductor portions extends along a main axis (A) of the power supply cable, the shielding element extending along this main axis, said at least one excess thickness extending transversely to this main axis.

5. The power supply cable (10) according to claim 4, wherein said at least one excess thickness extends at least partially around the main axis.

6. The power supply cable (10) according to claim 4 or 5, wherein said fuse has two ends each connected to an electrical conductor portion, the shielding element extending along said main axis beyond both ends of said fuse.

7. The power supply cable (10) according to any one of the preceding claims, wherein said at least one excess thickness has a maximum transverse size at least 20% greater than the maximum transverse size of a central portion of the shielding element arranged at said fuse, preferably at least 50% greater, more preferably at least 70% greater.

8. The power supply cable (10) according to any one of the preceding claims, wherein the shielding element has a cross-section that increases at least partially from a central portion arranged at said fuse toward said at least one end portion.

9. The power supply cable (10) according to any one of the preceding claims, wherein the shielding element has an outer surface having a plurality of protrusions (42).
